# FASCICULE DE BREVET EUROPEEN

(11) **EP 0 643 427 B1**
(45) Date de publication et mention de la délivrance du brevet: **19.11.1997**
(21) Numéro de dépôt: 94810467.4
(22) Date de dépôt: 11.08.1994
(51) Int. Cl.: H01L 41/09

(54) **Moteur électrique à éléments vibrants et coupleur élastique**
Elektrischer Motor mit Vibrationselementen und elastischer Kupplung
Electric motor with vibrating elements and elastic coupler

(30) Priorité: 18.08.1993 FR 9310085
(43) Date de publication de la demande: 15.03.1995
(73) Titulaire: FIGEST B.V., NL-2321 JV Leiden (NL)
(72) Inventeur: Claeyssen, Frank, F-38240 Meylan (FR); Le Letty, Ronan, F-29129 Combrit (FR); Lhermet, Nicolas, F-38240 Meylan (FR)
(74) Mandataire: Meylan, Robert Maurice

(56) Documents cités:
- EP-A- 0 370 508
- DE-A- 1 613 087
- PATENT ABSTRACTS OF JAPAN, vol. 009 no. 325 (E-368), 20 Décembre 1985 & JP-A-60 156 283

## Description

L'invention a pour objet un moteur électrique comprenant au moins une paire de transducteurs comprenant chacun un élément vibrant, disposés colinéairement, en contact permanent avec un bâti et excités de manière à ce que leurs éléments vibrants vibrent à une même fréquence, selon l'alignement des transducteurs, mais avec un déphasage de 90°, un moyen élastique de couplage auquel sont appliquées les vibrations des deux transducteurs, et au moins un élément entraîné par frottement par le moyen de couplage dont la zone de contact avec l'élément entraîné est animée d'un mouvement circulaire ou elliptique.

Il a déjà été proposé de réaliser de tels moteurs ou actionneurs au moyen de dispositifs piézo-électriques. De tels moteurs piézo-électriques sont décrits aux pages 470 à 473 du chapitre "piezokeramische Vibromotoren" de la revue "FEINGERÄTETECHNIK" octobre 1983. Cette revue décrit un actionneur piézo-électrique utilisant deux dispositifs piézo-électriques perpendiculaires l'un à l'autre et reliés par un élément de couplage en forme de bille ou de demi-cylindre de telle manière que l'élément de couplage est entraîné dans un mouvement circulaire ou elliptique permettant d'entraîner un organe moteur par frottement ou, réciproquement, d'être entraîné.

Des applications de ce principe de moteur sont décrites par ailleurs dans le brevet US 4 613 782. Ce brevet décrit notamment un moteur comportant deux transducteurs piézo-électriques multi-couches fixés colinéairement sur une base et une structure de couplage combinant les vibrations des dispositifs piézo-électriques. Cette structure est constituée de quatre barres de liaison reliées entre elles et à la base par sept articulations de manière à former une structure polygonale dont l'un des côtés est formé par la base elle-même. L'emploi d'éléments piézo-électriques multi-couches permet d'obtenir une force vibratoire relativement élevée, mais le rendement du moteur est malgré tout relativement faible, car une partie des vibrations d'excitation des transducteurs est absorbée par la base. D'autre part, les modes de résonance sont diffus, donc inexploitables et la maîtrise de la structure de couplage est difficile. Enfin, l'ensemble présente une complexité certaine qui rend sa réalisation délicate et coûteuse.

De la demande de brevet EP 0 370 508, on connaît un moteur ultrasonique constitué d'un transducteur monté diamétralement dans un moyen de couplage constitué d'un vibrateur cylindrique entraînant des rotors disposés autour du vibrateur cylindrique. Lorsque le transducteur est excité, la section du vibrateur se déforme selon une ellipse, mais chaque point matériel du vibrateur se déplace selon une trajectoire linéaire alternative. Or, il est connu qu'une trajectoire linéaire est beaucoup moins efficace qu'une trajectoire elliptique. En outre, le sens de rotation d'un tel moteur ne peut pas être inversé. L'adjonction d'un second transducteur ne modifie pas ces conditions.

La présente invention a pour but d'augmenter le rendement de ce type de moteur, d'en faciliter la maîtrise de ses paramètres et d'élargir le champ de ses applications, par des moyens aussi simples que possible. Dans ce but, on a cherché avant tout à intervenir au niveau des moyens de couplage.

Le moteur électrique selon l'invention est défini à la revendication 1.

Dans un tel moteur, chaque point de la pièce élastique de couplage décrit une trajectoire elliptique, d'excentricité plus ou moins prononcée, et tous les points de la pièce élastique décrivent une ellipse dans le même sens et en phase quelle que soit leur position sur la pièce élastique. Le sens d'entraînement peut être inversé par simple inversion de l'alimentation de l'un des transducteurs.

La forme de l'élément de couplage, qui remplit le triple rôle de coupleur de vibrations, de transformateur géométrique de vibrations et de transformateur mécanique d'amplitudes, s'avère particulièrement judicieuse. Elle est particulièrement apte à transformer des amplitudes de déplacement et des amplitudes de force. Elle participe à la résonance de l'ensemble.

Les transducteurs sont de type piézo-électrique, magnétostrictif ou électrostrictif.

La pièce de couplage est de préférence en forme d'anneau, c'est-à-dire travaillant dans un plan, ou en forme de volume, par exemple en forme d'ellipsoïde, se déformant dans toutes les directions.

Pour un anneau elliptique comprimé suivant son grand axe, les amplitudes de déplacement radial suivant son petit axe sont amplifiées dans un rapport supérieur à 1 de façon non négligeable et voisin du rapport grand axe/petit axe. En pratique, des facteurs d'amplification de 2 à 5 peuvent être obtenus. Les forces sont à l'inverse diminuées dans le même rapport.

Il est également possible de comprimer l'anneau elliptique ou l'ellipsoïde selon son petit axe. Dans ce cas, les amplitudes de déplacement sont réduites, mais, à l'inverse, les forces sont amplifiées.

Il est à noter que l'effet de transformation en amplitude n'intervient que dans la réalisation de la composante radiale de déplacement du point de contact avec l'élément entraîné. Sa composante axiale est indépendante en principe de cet effet et donc de la forme de l'anneau, respectivement du volume. Cette constatation est très importante lorsqu'il s'agit d'obtenir un fonctionnement satisfaisant en résonance.

L'élément de couplage permet d'exploiter facilement des modes résonnants très prononcés qui se traduisent par un mouvement elliptique dont les paramètres d'axe horizontal et vertical dépendent de la fréquence du mode résonnant et peuvent donner lieu à des mouvements soit de très faible vitesse et fort couple, soit de grande vitesse et faible couple. Les performances de tels moteurs sont sensiblements améliorés par rapport à celles des moteurs antérieurs.

Il convient également de relever la simplicité de réalisation et par conséquent le coût réduit.

Le dessin annexé représente, à titre d'exemple, quelques modes d'exécution du moteur selon l'invention.

La figure 1 illustre le principe du moteur selon l'invention et son fonctionnement.

La figure 2 représente une première forme d'exécution de coupleur annulaire.

La figure 3 est une vue selon A du coupleur de la figure 2.

La figure 4 représente une seconde forme d'exécution de coupleur annulaire.

La figure 5 représente une vue selon A du coupleur de la figure 4.

La figure 6 représente une troisième forme d'exécution de coupleur annulaire.

La figure 7 est une vue selon A du coupleur de la figure 6.

La figure 8 représente un coupleur de forme ovoïde.

La figure 9 est une vue en coupe transversale du coupleur de la figure 8.

La figure 10 est une vue en coupe axiale du coupleur de la figure 8.

La figure 11 est une vue axiale schématique d'un moteur à deux rotors et deux dispositifs d'entraînement.

La figure 12 est une vue en coupe axiale selon XII-XII du moteur de la figure 11.

La figure 13 représente un chariot à moteur linéaire à transducteurs externes.

La figure 14 représente un moteur linéaire à deux rails symétriques.

La figure 15 représente un moteur à coupleur annulaire et transducteurs internes.

La figure 16 est une vue en coupe selon XVI-XVI de la figure 15.

La figure 17 représente un chariot à moteur linéaire utilisant la structure représentée aux figures 15 et 16.

La figure 18 est une vue en coupe selon XVIII-XVIII de la figure 17.

La figure 19 représente schématiquement un moteur à deux rotors et coupleur elliptique comprimé selon son petit axe.

La figure 20 est une vue en coupe selon XX-XX de la figure 19.

La figure 21 représente schématiquement un moteur à deux rotors avec transducteurs internes.

La figure 22 est une coupe selon XXII-XXII de la figure 21.

La figure 23 représente schématiquement un moteur à rotor et coupleur semi-elliptique et transducteurs externes.

La figure 24 représente un moteur du même type à transducteurs internes.

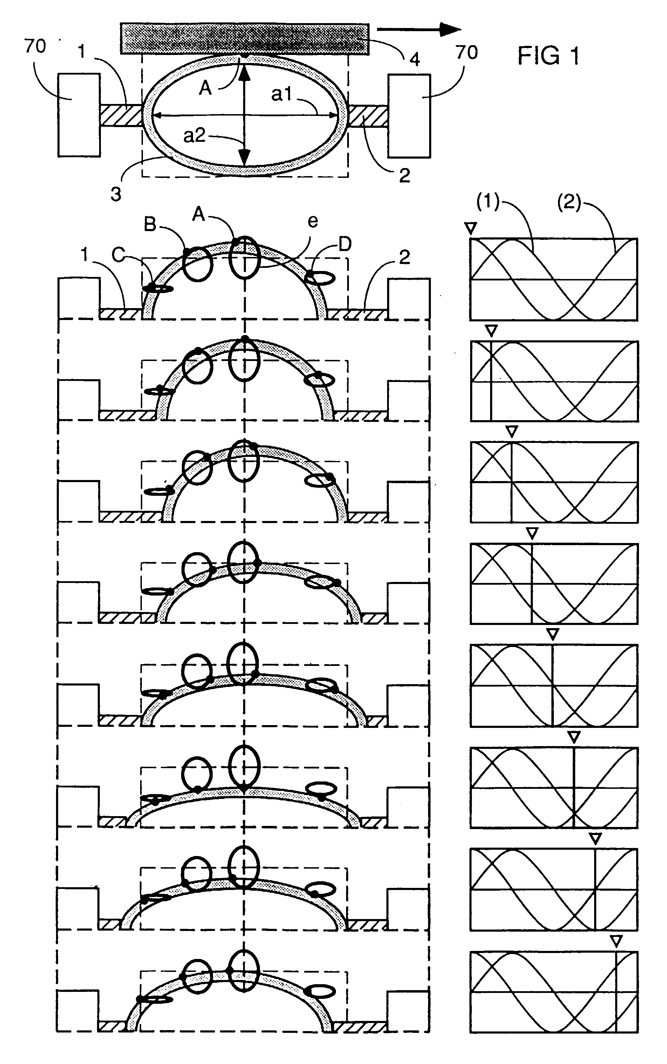

Le principe de construction du coeur du moteur selon l'invention est représenté schématiquement à la figure 1. Il est constitué de deux transducteurs 1 et 2 disposés colinéairement de chaque côté d'un coupleur mécanique 3. Ces transducteurs 1 et 2 sont en contact permanent, par l'une de leurs extrémités, avec un bâti 70 et par l'autre extrémité avec le coupleur mécanique 3. Les transducteurs 1 et 2 sont conçus pour engendrer des vibrations longitudinales dans le sens de l'axe d'aligne-, ment a. Ces transducteurs sont de type piézo-électrique magnétostrictif ou électrostrictif. Les transducteurs, piézo-électriques peuvent utiliser des matériaux connus par exemple des céramiques frittées de PZT (référence commerciale P189), du BaTiO3. Si les transducteurs sont de type magnétostrictif, on utilisera de préférence des matériaux magnétostrictifs tels que les alliages de Terres Rares- fer et en particulier l'alliage commercialisé sous la marque déposée TERFENOL-D.

Le coupleur 3 est constitué, par exemple, d'un anneau elliptique en matériau élastiquement déformable, par exemple de l'acier ou un alliage d'aluminium. Les extrémités diamétralement opposées de cet anneau 3 sont en contact permanent avec les transducteurs 1 et 2 et en général fixées à ces transducteurs. Le coupleur 3 remplit la triple fonction de coupleur de vibrations, de transformateur géométrique de vibrations et de transformateur mécanique d'amplitudes. Les transducteurs 1 et 2 sont excités à la même fréquence, mais avec un déphasage de Π/2 (90°). La figure 1 représente, de manière très fortement exagérée, la déformation du coupleur 3 par les transducteurs 1 et 2 pendant une oscillation. Considérons le point A déterminé par l'intersection du petit rayon de l'anneau 3 avec son contour extérieur. Comme ceci ressort des différentes positions représentées à la figure 1, ce point A décrit une ellipse e à chaque oscillation des transducteurs. Cette trajectoire elliptique a été décrite en détail dans les documents cités plus haut. Si un corps 4 est maintenu en contact avec le coupleur 3 au point A ou dans la région de ce point, il sera dès lors entraîné par frottement vers la droite, dans le sens de la flèche. Inversement, si le corps 4 est fixe, c'est l'ensemble transducteurs/coupleur qui sera mis en mouvement. Le coupleur 3 assure donc une transmission des vibrations et une transformation géométrique de ces vibrations, puisqu'à partir de vibrations axiales selon l'axe a on obtient des vibrations axiales et radiales déphasées générant l'ellipse e. Si on considère trois autres points B, C et D du contour extérieur du coupleur, choisis de manière arbitraire, on constate que ces points, astreints à maintenir une distance curviligne constante avec l'une des extrémités du coupleur, décrivent chacun une ellipse, d'excentricité plus ou moins prononcée et que tous les points du contour extérieur du coupleur décrivent cette ellipse dans le même sens et en phase.

On constate enfin sur la figure 1, que si on utilise une coque elliptique complète, le centre de gravité de celle-ci décrit un mouvement alternatif dans l'axe des transducteurs.

L'aptitude de transformer les amplitudes de déplacement et les amplitudes de force est une caractéristique importante de la forme elliptique, ovale ou quasi elliptique ou en anse de panier du coupleur. Pour simplifier la description, on considérera dès à présente que le coupleur 3 présente une forme elliptique. Pour un coupleur elliptique comprimé suivant le grand axe de l'ellipse par des déplacements d'amplitude u_{z}, les amplitudes de déplacement radial uᵣ suivant son petit axe sont amplifiées dans un rapport α > 1 de façon non négligeable et voisin du rapport grand axe/petit axe a1/a2. En pratique, des facteurs d'amplification de 2 à 5 peuvent être obtenus. Les forces sont, à l'inverse, diminuées dans le même rapport α.

Le coupleur 3 pourrait être également excité selon le petit axe de l'ellipse. Dans ce cas, on a α < 1. α = 1 si les axes de l'ellipse sont égaux, c'est-à-dire si l'ellipse est un cercle.

On voit dès lors que la forme du coupleur permet de maîtriser parfaitement les fonctions amplificateur de déplacement et amplificateur de force. On notera en outre que l'effet de transformation d'amplitude n'intervient que dans la réalisation de la composante radiale de déplacement du point de contact A. Sa composante axiale est indépendante, en principe, de cet effet, et donc indépendante de la forme du coupleur 3. Ce point est très important pour la réalisation du moteur pour obtenir un fonctionnement satisfaisant en résonance, en particulier pour la réalisation de moteurs piézo-électriques. Le coupleur 3 ne doit en effet pas constituer un élément amortisseur de vibrations qui réduirait par trop le rendement de tels moteurs et les rendraient inutilisables.

Le coupleur 3 peut présenter une structure vibrante plane ou tridimensionnelle. Quelques exemples seront décrits ci-après.

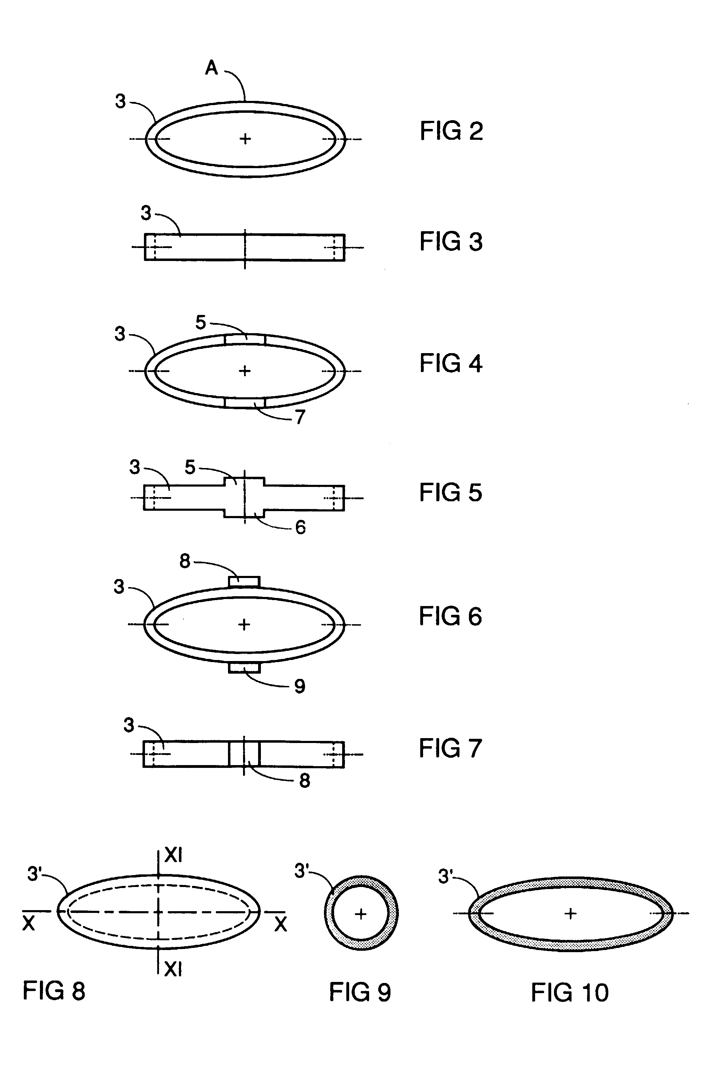

Les figures 2 et 3 représentent une forme de coupleur de structure vibrante plane de même forme que celle représentée à la figure 1. Les surfaces extérieures et intérieures du coupleur 3 sont ici des surfaces cylindriques.

Il est possible de modifier la fréquence de résonance d'un tel coupleur ainsi que son comportement en déformation, c'est-à-dire la forme de l'ellipse e, en ajoutant des masses dans la zone du point A et en un point symétrique de celui-ci. Des exemples sont représentés aux figures 4 à 7.

Dans l'exemple représenté aux figures 4 et 5, ces masses additionnelles sont formées par des saillies latérales 5, 6, 7. Dans la forme d'exécution selon les figures 6 et 7, ces masses additionnelles sont formées par des saillies radiales 8 et 9.

Une structure tridimensionnelle du coupleur 3 est représentée aux figures 8 à 10. Le coupleur, désigné par 3', a la forme d'une coque se présentant comme un ellipsoïde dont les figures 9 et 10 représentent des coupes selon IX-IX et X-X. Ce coupleur peut également être muni de masses ajoutées sous la forme d'un anneau ou de segments d'anneau.

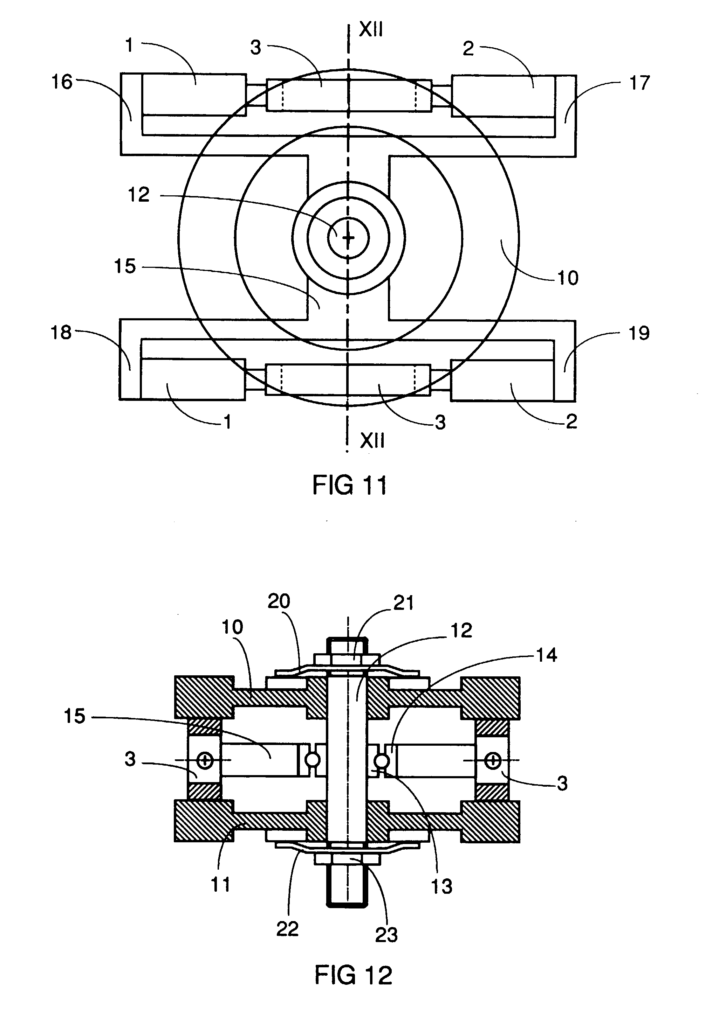

Un exemple de moteur sera décrit maintenant en relation avec les figures 11 et 12. Ce moteur comprend deux rotors 10 et 11 en forme de disque solidaires en rotation d'un arbre 12 mais libres axialement sur cet arbre, sur lequel est chassée la bague intérieure 13 d'un roulement à billes dont la bague extérieure 14 est fixée dans un bâti 15 s'étendant dans un plan perpendiculaire à l'arbre 12. Ce bâti 15, en forme de H dans cet exemple, présente en outre deux paires de bras 16, 17 et 18, 19. Entre les bras 16 et 17 est monté un premier dispositif entraîneur réalisé selon le schéma représenté à la figure 1 avec un coupleur tel que représenté aux figures 2 et 3. Le coupleur 3 est fixé par tout moyen approprié aux transducteurs, par exemple par vissage ou collage. Pour des raisons de simplification de fabrication, la forme elliptique du coupleur 3 peut être efficacement approximée par une forme en anse de panier, c'est-à-dire une courbe définie uniquement par deux rayons de courbure. Entre les deux autres bras 18 et 19, symétriquement au premier dispositif d'entraînement et relativement à l'axe 12, est monté un second dispositif d'entraînement identique au premier. Le rotor 10 est en outre retenu axialement par un ressort 20 maintenu sous tension par un écrou 21. De même le rotor 11 est soumis à l'action d'un ressort 22 maintenu sous tension par un écrou 23. Les rotors 10 et 11 sont ainsi maintenus élastiquement avec une certaine pression contre les coupleurs 3, lesquels sont donc précontraints. Les coupleurs 3, diamétralement opposés relativement à l'arbre 12, agissent ainsi sur chacun des rotors 10 et 11 en deux points diamétralement opposés relativement au petit axe de chacun des coupleurs. L'ensemble bâti 15 avec ses dispositifs d'entraînement constitue le stator du moteur.

Suivant le même principe, il est possible de réaliser un moteur à quatre stators ou davantage répartis autour de l'arbre 12.

Si les stators sont excités en phase, cela se traduit par une vibration des rotors 10 et 11 selon l'axe de l'arbre 12. Si l'on dispose de plusieurs stators, cette vibration peut être quasiment supprimée en introduisant un déphasage mécanique entre chaque stator, de telle sorte que les rotors sont maintenus en sustentation à une hauteur quasiment constante, ce qui permet de supprimer les impacts entre les stators et les rotors et ce qui conduit à une augmentation de la durée de vie. Ce déphasage mécanique peut déjà être introduit dans un moteur à deux stators tel que représenté.

Les rotors pourraient être des roues à rayons entraînés par leur jante.

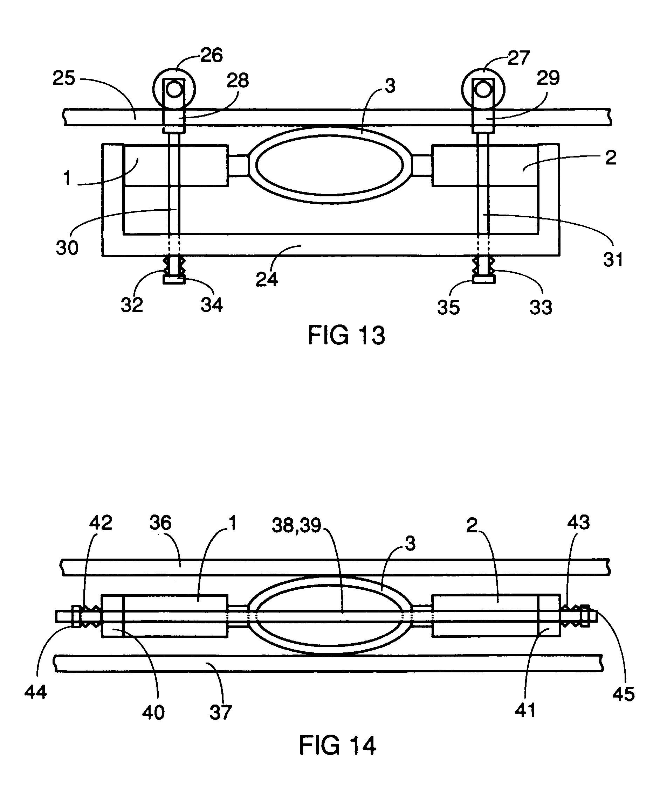

Sur la base du principe du moteur de la figure 1, il est possible de construire des moteurs linéaires. Des exemples de tels moteurs sont représentés aux figures 13 à 18.

La figure 13 représente un chariot 24 suspendu à un rail 25 par une paire de galets 26 et 27 montés dans des chapes 28 et 29 auxquelles sont fixées des barres de suspension 30 et 31 munies d'une tête 34, 35. Le chariot 24 présente simplement une forme en U entre les branches duquel est monté un dispositif d'entraînement constitué de deux transducteurs 1 et 2 et d'un coupleur 3. Des rondelles Belleville 32 et 33, disposées entre les têtes 34, respectivement 35 des barres de suspension 30 et 31 et le bâti 24, assurent une précontrainte du coupleur 3 maintenu ainsi en contact avec la face inférieure du rail 25. Selon le sens du déphasage de l'excitation des transducteurs 1 et 2, le chariot se déplace à gauche ou à droite. Comme dans le cas d'un moteur rotatif, il est possible de multiplier le nombre de dispositifs d'entraînement. De même, il est possible d'introduire des déphasages mécaniques entre chaque dispositif d'entraînement de manière à supprimer les vibrations du chariot.

Selon une variante d'exécution non représentée mais qu'il est facile de s'imaginer, le chariot peut présenter une symétrie relativement au rail, c'est-à-dire des coupleurs agissant des deux côtés du rail, ce qui permet de supprimer les galets de roulement.

La figure 14 représente un moteur linéaire à deux rails parallèles 36, 37 entre lesquels est monté un dispositif moteur du type représenté à la figure 1. L'ensemble est précontraint axialement dans un cadre formé d'une paire de barres 38, 39 parallèles traversant des jougs 40 et 41, par des ressorts 42, 43, constitués sous la forme de rondelles Belleville comprimées entre un écrou 44, respectivement 45 et chacun des jougs 40, 41. Cette précontrainte axiale se traduit par une précontrainte transversale qui maintient le coupleur 3 en contact avec les deux rails 36 et 37. En variante, la précontrainte pourrait être appliquée au coupleur 3.

En remplaçant le coupleur 3 de structure planaire par un coupleur 3' à symétrie axiale telle que représentée aux figures 8 à 10, et les barres 36 et 37 par un tube, on obtient un moteur linéaire tubulaire.

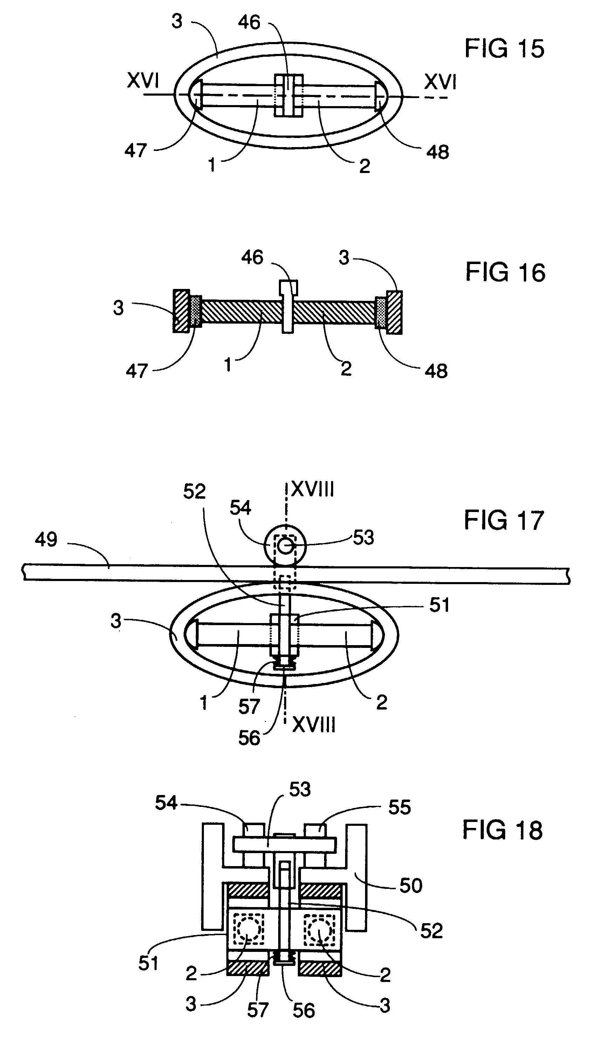

Jusqu'ici, on a toujours considéré des structures dans lesquelles les transducteurs étaient situés à l'extérieur du coupleur 3. Il est toutefois possible d'utiliser l'espace disponible à l'intérieur du coupleur 3 pour y disposer les transducteurs. Ce mode d'exécution est représenté aux figures 15 et 16. Le coupleur 3 est à nouveau de forme annulaire elliptique ou quasi elliptique. Les transducteurs 1 et 2 sont disposés à l'intérieur de l'anneau, selon le grand axe de l'ellipse. Ils sont portés par un support médian 46. Les transducteurs 1 et 2 sont munis de têtes de forme 47 et 48 s'adaptant à la courbure intérieure de l'ellipse.

Les figures 17 et 18 représentent un exemple de moteur linéaire réalisé selon la conception représentée aux figures 15 et 16. Ce moteur linéaire comprend une paire de rails parallèles 49, 50 auxquels est suspendu un bâti 51 par une barre centrale de suspension 52 attachée à un axe 53 portant deux galets 54 et 55 roulant respectivement sur les rails 49 et 50. L'extrémité inférieure de la barre de suspension 52 est munie d'une tête 56, des rondelles élastiques de précontrainte 57 étant comprimées entre cette tête 56 et le bâti 51. Le bâti 51 porte deux structures d'entraînement telles que représentées aux figures 15 et 16, ces structures étant disposées parallèlement et leurs coupleurs 3 coopérant respectivement avec chacun des rails 49 et 50. De même que dans les exemples précédents, il est possible d'utiliser plusieurs éléments d'entraînement, de préférence déphasés mécaniquement et/ou une structure symétrique relativement aux rails 49 et 50.

On a vu plus haut que la compression du coupleur selon son petit axe a pour effet d'amplifier la force et de réduire l'amplitude du mouvement. Par rapport aux moteurs existant, des moteurs selon l'invention, par exemple de type piézo-électrique, permettent de réaliser des moteurs très simples et de supprimer les réducteurs de vitesse mécaniques compliqués.

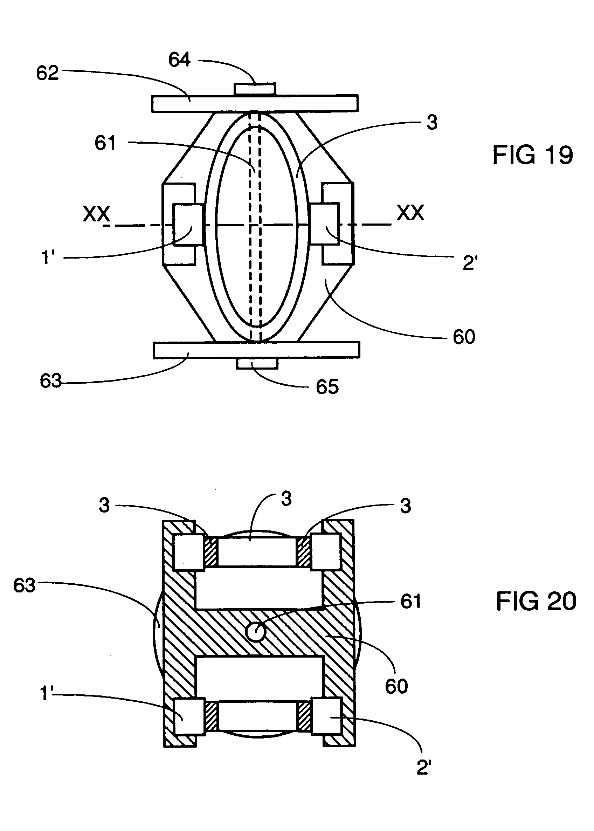

Les figures 19 et 20 représentent schématiquement un tel moteur. Ce moteur est du même type que celui représenté à la figure 12. Comme ce dernier il comprend un bâti 60 en forme de H dans lequel est monté rotativement un arbre 61 de part et d'autre duquel sont montés deux dispositifs d'entraînement comprenant chacun un coupleur 3 fixé en deux points opposés selon le grand diamètre de l'ellipse à deux transducteurs piézo-électriques 1' et 2'. Chacun de ces dispositifs d'entraînement entraîne deux rotors 62 et 63 constitués de disques parallèles calés sur chacune des extrémités de l'arbre 61 et maintenus en appui contre les coupleurs 3 par des éléments de précontrainte 64 et 65. Chacun des coupleurs 3 vient en contact avec les rotors 62 et 63 en deux points situés aux extrémités du grand axe de l'ellipse.

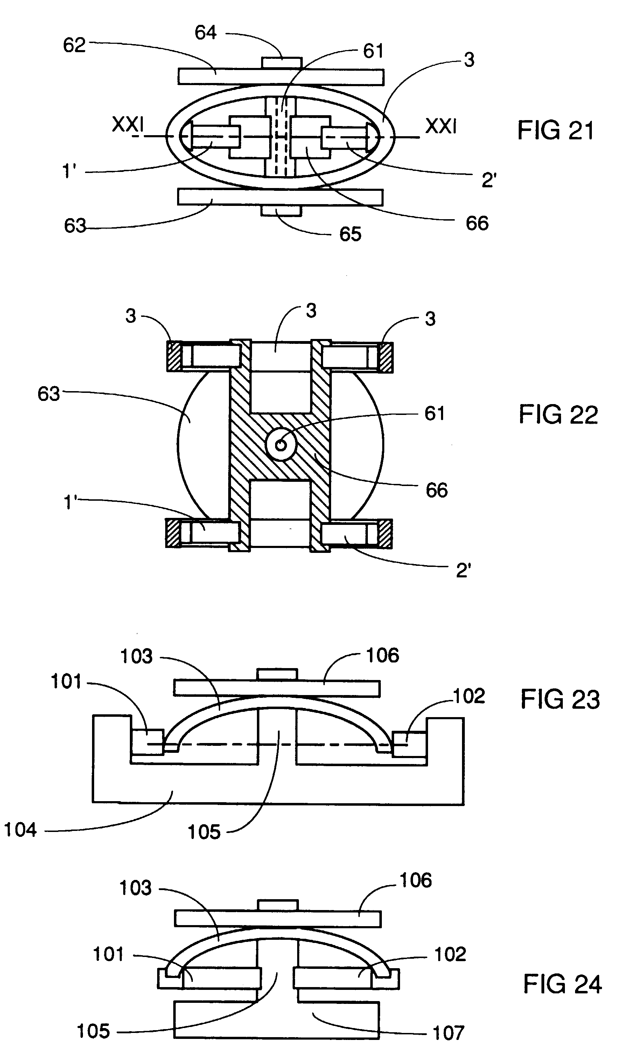

Les figures 21 et 22 représentent maintenant un moteur avec une disposition interne des transducteurs 1' et 2' fixés sur un bâti 66 en forme de H entièrement situé à l'intérieur des coupleurs 3. Les transducteurs 1' et 2' sont également situés à l'intérieur des coupleurs qui sont ici comprimés selon leur grand axe. Cette structure est particulièrement compacte et propre à être montée dans un tube d'enroulement pour son entraînement en rotation directement par les rotors 62 et 63.

Si l'on considère la figure 1, on se rend compte que le déplacement elliptique selon l'ellipse e peut également être obtenu avec un demi-anneau 3 seulement. Les figures 23 et 24 illustrent des exécutions de moteurs utilisant un coupleur en forme de demi-anneau, par exemple en forme d'anse de panier. Dans l'exécution selon la figure 23, un demi-anneau 103 est fixé par ses extrémités à deux transducteurs 101 et 102 montés sur un bâti 104 portant un arbre 105 sur lequel est monté un rotor 106 en forme de disque. En principe le moteur comprendra au moins un second dispositif d'entraînement monté symétriquement à l'arbre 105.

L'exécution représentée à la figure 24 diffère de l'exécution précédente en ce qu'elle comprend un bâti 107 monté, avec ses transducteurs 101 et 102, à l'intérieur du coupleur 103.

## Revendications

1. Moteur électrique comprenant au moins une paire de transducteurs (1, 2 ; 1', 101, 102) comprenant chacun un élément vibrant, disposés colinéairement de manière à engendrer des vibrations longitudinales dans le sens de leur axe d'alignement, en contact permanent par l'une de leurs extrémités avec un bâti (70 ; 15 ; 24 ; 38 ; 39 ; 46 ; 51 ; 60 ; 66 ; 104 ; 107) et par l'autre de leurs extrémités avec un moyen élastique de couplage (3 ; 3' ; 103) auquel sont appliquées les vibrations des deux transducteurs, les transducteurs étant excités de manière à ce que leurs éléments vibrants vibrent à une même fréquence, selon l'alignement des transducteurs, mais avec un déphasage de 90°, et au moins un élément (4 ; 10 ; 11 ; 25 ; 36, 37 ; 49, 50 ; 62, 63 ; 106) entraîné par frottement par le moyen de couplage dont la zone de contact avec l'élément entraîné est animée d'un mouvement circulaire ou elliptique, moteur dans lequel le moyen de couplage est une pièce élastique en contact en deux points opposés avec les transducteurs et présentant une symétrie relativement à un plan perpendiculaire à la ligne d'action des transducteurs et une coupe, selon un plan contenant cette ligne d'action, de forme au moins approximativement elliptique, en particulier circulaire, ou semi-elliptique.

2. Moteur selon la revendication 1, caractérisé en ce que le moyen de couplage est un anneau (3).

3. Moteur selon la revendication 1, caractérisé en ce que le moyen de couplage est un demi-anneau (103).

4. Moteur selon la revendication 1, caractérisé en ce que le moyen de couplage est une coque (3') dont la forme est au moins approximativement celle d'un ellipsoïde ou d'une sphère.

5. Moteur rotatif selon la revendication 2, caractérisé en ce qu'il comprend deux rotors (10, 11) en forme de disque ou de roues à rayons, parallèles et coaxiaux, entre lesquels sont montés au moins deux anneaux de couplage (3) avec leurs transducteurs (1, 2), les anneaux étant précontraints entre les rotors.

6. Moteur linéaire selon la revendication 2, caractérisé en ce que l'anneau (3) est monté sur un chariot (24) suspendu à un rail (25) et muni de moyens élastiques (32, 33) appliquant l'anneau contre le rail.

7. Moteur linéaire selon la revendication 2, caractérisé en ce qu'il comprend une paire d'anneaux opposés (3), avec leurs transducteurs, montés sur un chariot et un rail pincé entre les anneaux.

8. Moteur linéaire selon la revendication 2, caractérisé en ce que l'anneau (3) et ses transducteurs (1, 2) sont montés entre deux rails (36, 37) parallèles dans un cadre (38, 39, 40, 41) comprenant des moyens de précontrainte (42, 43) de l'anneau dans le sens des transducteurs, de manière à appliquer l'anneau contre les deux rails.

9. Moteur linéaire selon la revendication 4, caractérisé en ce que la coque (3') avec ses transducteurs, est montée dans un tube cylindrique contre la paroi duquel la coque (3') est maintenue en contact par des moyens de précontrainte.

10. Moteur selon l'une des revendications 1 à 9, caractérisé en ce que le moyen de couplage (3; 3') est muni de masses additionnelles.

11. Moteur selon l'une des revendications 1 à 9, caractérisé en ce que les transducteurs sont situés à l'extérieur du moyen de couplage.

12. Moteur selon l'une des revendications 1 à 9, caractérisé en ce que les transducteurs sont situés à l'intérieur du moyen de couplage.

13. Moteur selon l'une des revendications 1 à 12, caractérisé en ce que les transducteurs sont de type piézo-électrique.

14. Moteur selon l'une des revendications 1 à 12, caractérisé en ce que les transducteurs sont de type magnétostrictif.

15. Moteur selon la revendication 14, caractérisé en ce que le matériau magnétostrictif est un alliage de Terre Rare-fer, en particulier du TERFENOL-D (marque déposée).

16. Moteur selon l'une des revendications 1 à 12, caractérisé en ce que la fréquence d'alimentation correspond à un mode résonnant du moyen de couplage.

17. Moteur selon l'une des revendications 1 à 12, caractérisé en ce que sa fréquence d'alimentation correspond à un mode quasi statique du moyen de couplage.

18. Moteur selon l'une des revendications 1 à 12, comportant au moins deux stators constitués chacun d'un moyen de couplage et d'une paire de transducteurs et ayant un bâti commun (15), caractérisé en ce que les stators sont alimentés avec un déphasage de telle manière que le rotor, respectivement les rotors, restent à une hauteur quasi-constante.

19. Moteur selon la revendication 18, comportant quatre stators dont les moyens de couplage sont disposés en carré autour de l'axe du moteur, caractérisé en ce que les stators sont alimentés avec un déphasage de 180° entre deux stators consécutifs.

## Patentansprüche

1. Elektrischer Motor mit wenigstens einem Paar von Wandlern (1, 2; 1', 101, 102), die jeder ein Schwingungselement aufweisen und kolinear derart angeordnet sind, dass longitudinale Schwingungen in Richtung ihrer Ausrichtungsachse erzeugt werden, wobei sich eines ihrer Enden in ständigem Kontakt mit einem Gehäuse (70; 15; 24; 38; 39; 46; 51; 60; 66; 104; 107) und ihr anderes Ende mit einem elastischen Kopplungsmittel (3; 3'; 103) befindet, auf welches die Schwingungen der beiden Wandler übertragen werden, welche derart erregt werden, dass ihre Schwingungselemente gemäss der Ausrichtung der Wandler mit ein und derselben Frequenz schwingen, jedoch mit einer Phasenverschiebung von 90°, wobei wenigstens ein durch Reibung vom Kopplungsmittel angetriebenes Element (4; 10; 11; 25; 36, 37; 49, 50; 62, 63; 106) vorgesehen ist, dessen Berührungszone mit dem angetriebenen Element zu einer kreisförmigen oder elliptischen Bewegung angeregt wird, und wobei das Kopplungsmittel ein elastisches Teil ist, das an zwei gegenüberliegenden Punkten mit den Wandlern in Berührung steht und eine Symmetrie relativ zu einer Ebene, die senkrecht zur Wirkungslinie der Wandler orientiert ist, und einen Schnitt längs einer diese Wirkungslinie enthaltenden Ebene aufweist, dessen Form wenigstens näherungsweise elliptisch, insbesondere kreisförmig, oder halbelliptisch ist.

2. Motor nach Anspruch 1, dadurch gekennzeichnet, dass das Kopplungsmittel ein Ring (3) ist.

3. Motor nach Anspruch 1, dadurch gekennzeichnet, dass das Kopplungsmittel ein Halbring (103) ist.

4. Motor nach Anspruch 1, dadurch gekennzeichnet, dass das Kopplungsmittel eine Schale (3') ist, die wenigstens näherungsweise die Form eines Ellipsoids oder einer Kugel hat.

5. Rotationsmotor nach Anspruch 2, dadurch gekennzeichnet, dass er zwei Läufer (10, 11) in Form von parallelen oder koaxialen Scheiben oder Speichenrädern aufweist, zwischen denen wenigstens zwei Kopplungsringe (3) mit ihren Wandlern (1, 2) montiert sind, wobei die Ringe zwischen den Läufern vorgespannt sind.

6. Linearmotor nach Anspruch 2, dadurch gekennzeichnet, dass der Ring (3) auf einem Schlitten (24) montiert ist, der an einer Schiene (25) aufgehängt und mit elastischen Mitteln (32, 33) versehen ist, welche den Ring gegen die Schiene drucKen.

7. Linearmotor nach Anspruch 2, dadurch gekennzeichnet, dass er ein Paar von gegenüberliegenden Ringen (3) mit ihren Wandlern aufweist, die auf einem Schlitten montiert sind, und dass eine zwischen den Ringen eingeklemmte Schiene vorgesehen ist.

8. Linearmotor nach Anspruch 2, dadurch gekennzeichnet, dass der Ring (3) und seine Wandler (1, 2) zwischen zwei parallelen Schienen (36, 37) in einem Rahmen (38, 39, 40, 41) montiert sind, welcher Mittel zum Vorspannen (42, 43) des Rings in Richtung der Wandler aufweist, derart, dass der Ring gegen die beiden Schienen gedrückt wird.

9. Linearmotor nach Anspruch 4, dadurch gekennzeichnet, dass die Schale (3') mit ihren Wandlern in einem zylindrischen Rohr montiert ist, mit dessen Wand die Schale (3') durch Vorspannungsmittel in Kontakt gehalten wird.

10. Motor nach einem der Ansprüche 1 bis 9, dadurch gekennzeichnet, dass das Kopplungsmittel (3; 3') mit zusätzlichen Massen versehen ist.

11. Motor nach einem der Ansprüche 1 bis 9, dadurch gekennzeichnet, dass sich die Wandler ausserhalb des Kopplungsmittels befinden.

12. Motor nach einem der Ansprüche 1 bis 9, dadurch gekennzeichnet, dass sich die Wandler im Innern des Kopplungsmittels befinden.

13. Motor nach einem der Ansprüche 1 bis 12, dadurch gekennzeichnet, dass die Wandler vom piezoelektrischen Typ sind.

14. Motor nach einem der Ansprüche 1 bis 12, dadurch gekennzeichnet, dass die Wandler vom magnetostriktiven Typ sind.

15. Motor nach Anspruch 14, dadurch gekennzeichnet, dass das magnetostriktive Material eine Seltene Erde-Eisen-Legierung ist, insbesondere TERFENOL-D (eingetragenes Warenzeichen).

16. Motor nach einem der Ansprüche 1 bis 12, dadurch gekennzeichnet, dass die Speisefrequenz einer Resonanzschwingung des Kopplungsmittels entspricht.

17. Motor nach einem der Ansprüche 1 bis 12, dadurch gekennzeichnet, dass die Speisefrequenz einer quasi-statischen Schwingung des Kopplungsmittels entspricht.

18. Motor nach einem der Ansprüche 1 bis 12, mit zwei Ständern, von denen jeder aus einem Kopplungsmittel und einem Paar von Wandlern besteht und welche ein gemeinsames Gehäuse (15) haben, dadurch gekennzeichnet, dass die Ständer mit einer Phasenverschiebung derart gespeist werden, dass der Läufer bzw. die Läufer auf einer quasi-konstanten Höhe bleiben.

19. Motor nach Anspruch 18, mit vier Ständern, deren Kopplungsmittel quadratisch um die Motorachse angeordnet sind, dadurch gekennzeichnet, dass die Ständer mit einer Phasenverschiebung von 180° zwischen zwei aufeinanderfolgenden Ständern gespeist werden.

## Claims

1. An electric motor comprising at least one pair of transducers (1, 2; 1', 2'; 101, 102) each comprising a vibrating element, these transducers being located colinearly in order to generate longitudinal vibrations in the direction of the axis of alignment, in permanent contact via one of their ends with a support structure (70; 15; 24; 38, 39; 46; 51; 60; 66; 104; 107) and via the other one of their ends with an elastic coupling means (3; 3'; 103) to which the vibrations of the two transducers are applied, the transducers being excited so that their vibrating elements vibrate at one and the same frequency, depending on the alignment of the transducers, but with a phase shift of 90°, and at least one element (4; 10, 11; 25; 36, 37; 49, 50; 62, 63; 106) frictionally driven by the coupling means whose zone of contact with the driven element is given a circular or elliptical movement, motor wherein the coupling means is an elastic component in contact at two opposed points with the transducers, and exhibiting symmetry relative to a plane perpendicular to the line of action of the transducers and a section, along a plane containing this line of action, of at least approximately elliptical, particularly circular or semi-elliptical shape.

2. The motor as claimed in claim 1, characterised in that the coupling means is a ring (3).

3. The motor as claimed in claim 1, characterised in that the coupling means is a half-ring (103).

4. The motor as claimed in claim 1, characterised in that the coupling means is a casing (3'), the shape of which is at least approximately that of an ellipsoid or of a sphere.

5. The rotary motor as claimed in claim 2, characterised in that it comprises two rotors (10, 11) in the form of a disk or of spoked wheels, which are parallel and coaxial, between which are mounted at least two coupling rings (3) with their transducers (1, 2), the ring being prestressed between the rotors.

6. The linear motor as claimed in claim 2, characterised in that the ring (3) is mounted on a carriage (24) suspended from a rail (25) and fitted with elastic means (32, 33) applying the ring against the rail.

7. The linear motor as claimed in claim 2, characterised in that it comprises a pair of opposed rings (3) with their transducers, mounted on a carriage and a rail gripped between the rings.

8. The linear motor as claimed in claim 2, characterised in that the ring (3) and its transducers (1, 2) are mounted between two parallel rails (36, 37) in a frame (38, 39, 40, 41) comprising a means (42, 43) for prestressing the ring in the direction of the transducers, so as to apply the ring against the two rails.

9. The linear motor as claimed in claim 4, characterised in that the casing (3') with its transducers, is mounted in a cylindrical tube against the wall of which the casing (3') is kept in contact by prestressing means.

10. The motor as claimed in one of claims 1 to 9, characterised in that the coupling means (3, 3') is fitted with additional masses.

11. The motor as claimed in one of claims 1 to 9, characterised in that the transducers are situated outside the coupling means.

12. The motor as claimed in one of claims 1 to 9, characterised in that the transducers are situated inside the coupling means.

13. The motor as claimed in one of claims 1 to 12, characterised in that the transducers are of piezoelectric type.

14. The motor as claimed in one of claims 1 to 12, characterised in that the transducers are magnetostriction transducers.

15. The motor as claimed in claim 14, characterised in that the magnetostriction material is a rare earth/iron alloy particularly TERFENOL-D (registered trademark).

16. The motor as claimed in one of claims 1 to 12, characterised in that the power supply frequency corresponds to a resonant mode of the coupling means.

17. The motor as claimed in one of claims 1 to 12, characterised in that its power supply frequency corresponds to an almost static mode of the coupling means.

18. The motor as claimed in one of claims 1 to 12, including at least two stators each one made up of a coupling means and of a pair of transducers having a common support structure (15), characterised in that the stators are powered with a phase shift such that the rotor, respectively the rotors, remain at an almost constant height.

19. The motor as claimed in claim 18, including four stators whose coupling means are located in a square about the axis of the motor, characterised in that the stators are powered with a phase shift of 180° between two consecutive stators.
